# EUROPEAN PATENT SPECIFICATION

(11) **EP 3 670 173 B1**
(45) Date of publication and mention of the grant of the patent: **16.02.2022**
(21) Application number: 19217040.5
(22) Date of filing: 17.12.2019
(51) Int. Cl.: B32B 1/08, B32B 3/26, B32B 3/30, B32B 13/12, B32B 15/08, B32B 15/082, B32B 15/085, B32B 15/092, B32B 15/095, B32B 15/18, B32B 27/20, E04H 12/02

(54) **SUPPORT POLE WITH HIGH-FRICTION OUTER SURFACE**
STÜTZMAST MIT AUSSENFLÄCHE MIT HOHER REIBUNG
POTEAU DE SUPPORT DOTÉ D'UNE SURFACE EXTÉRIEURE À FRICTION ÉLEVÉE

(30) Priority: 17.12.2018 NO 20181630
(43) Date of publication of application: 24.06.2020
(73) Proprietor: Lika Miljø AS, 4633 Kristiansand S (NO)
(72) Inventor: UTSOGN, Tor Sigbjørn, 4640 Søgne (NO)
(74) Representative: Håmsø Patentbyrå AS

(56) References cited:
- WO-A2-01/02662

## Description

The invention relates to a utility pole comprising an elongated member, wherein an outer layer of the elongated member comprises a synthetic material. More specifically, the invention relates to a utility pole comprising a synthetic material which is easy to climb in low temperatures. The invention also relates to use of the utility pole.

Conventional utility poles are often made from wood. The wood is usually treated with chemicals to preserve them from weather, insects and decay. However, the chemicals may be harmful to the environment and poisonous to humans and animals. As a result, more and more utility poles are now manufactured from synthetic materials.

Most synthetic materials have the advantage that they are durable and have a low weight. Utility poles must be so designed that they allow for a utility worker to climb the pole using standard gear like crampons and slings. However, some materials, e.g. fibreglass and carbon fibre, are very hard and thus unsuitable for climbing using crampons.

Document US 2005/0223673 discloses a composite utility pole wherein a deformable material is co-extruded over the outer surface of the pole. The deformable material is sufficiently deformable to permit the spikes on a crampon to grip the outer surface and thus enable the utility worker to climb the pole. A drawback with composite materials is that they become harder in low temperatures and thus lose their deformability. Hence, it would be difficult to climb a cold pole as the surface material would not deform to give the crampons a good grip.

Document WO 01/02662 A2 describes an elongated support structure suitable for outdoor use as a utility pole, post, or piling. The elongated support member includes a climbing layer with very demanding requirements and properties: it must be made of such a material that puncture holes tend to close; its density should neither be insufficient nor exaggerated such that climbing spikes can penetrate the layer but not tear through; and its thickness should be sufficient to accommodate climbing spikes without making contact with the reinforced layer.

It is an object of the invention to provide a utility pole with an outer surface that allows for climbing the pole even in low temperatures.

The object is achieved through features, which are specified in the description below and in the claims that follow.

The invention is defined by the independent patent claim. The dependent claims define advantageous embodiments of the invention.

The object of the invention is achieved by means a utility pole comprising an elongated member having an outer layer, wherein the outer layer comprises a synthetic material, wherein the outer layer is provided with a plurality of recesses on an external surface of the outer layer, the recesses being configured to receive spikes on a crampon.

The outer layer may typically be made from a different material than the rest of the utility pole as will be explained below. Alternatively, the whole pole, including the outer layer may be made from the same material

The invention has the effect that the crampons will get a good grip of the pole, allowing the utility worker to climb the pole also in low temperatures. During climbing the spikes on the crampon will engage with the recesses, thus preventing the crampon from slipping. Low temperatures may be defined as temperatures below ten degrees Celsius, below five degrees Celsius or below zero degrees Celsius. The outer layer may have recesses over a full length of the elongated member. The outer layer may have recesses around a full circumference of the elongated member. The recesses may have a diameter corresponding to a diameter of a spike on a crampon, for example 1 to 10 mm.

In an embodiment of the invention, the elongated member is cylindrical or substantially cylindrical. In another embodiment, the elongated member is conical. In use, the conical elongated member will have a diameter which is decreasing with a length of the member. In another embodiment, the elongated member has an oval, a square, a pentagonal, a hexagonal or another cross-sectional geometry.

In an embodiment of the invention, the outer layer is deformed such that the plurality of recesses is formed on the external surface. Forming the recesses by means of deforming the outer layer has the effect that the utility pole may be manufactured cheaper compared to other ways of forming the recesses, for example by means of drilling or casting. To deform the outer layer, the outer layer may e.g. be exposed to rubbing or sandblasting. In another embodiment, the outer layer may be deformed by means of serration.

In an embodiment of the invention, the deformation of the outer layer is a plastic deformation. By means of plastically deforming the outer layer it is ensured that the recesses persist on the external surface and that the outer layer to not creep back to its initial shape.

In an embodiment of the invention, the external surface is further provided with protrusions projecting out from the external surface, wherein the protrusions form an edge around the recesses. In particular, one way of obtaining a surface with protrusions surrounding the recesses is by means of serration wheels on the external surface in combination with heat.

By means of the protrusions a surface friction of the external surface is increased as compared to a smooth surface or a surface with only recesses. This has the effect that a sling used by the utility worker and disposed around the pole is less prone to sliding along the surface. Utility workers often use slings to secure them from falling backwards. For example, the sling may be arranged around the utility pole and connected in both ends to a harness worn by the utility worker.

In an embodiment of the invention, the synthetic material is a plastic. Plastic is cost competitive compared to wood and is easy to manufacture. Most plastics is also easy to form but has the characteristic of becoming hard in low temperatures. The plastic may be from the group of thermoplastics such as polyethylene (PE) or polyvinyl chloride (PVC), or from the group of thermo set plastics such as polyurethane or epoxy resin.

In an embodiment of the invention, the outer layer comprises a synthetic material and at least one additional material. The additional material may for example be a rubber, a nylon or a metal. The additional material may for example be fibres of rubber, nylon or metal. In another embodiment of the invention, the outer layer comprises a composite material comprising at least a synthetic material.

In an embodiment of the invention, the elongated member comprises an inner element, wherein the outer layer is disposed onto an outer surface of the inner element. By means of the inner element a strength of the utility pole is increased, wherein the strength is defined as the maximum load or stress that the pole can withstand before plastic deformation or failure. A load may for example be bending, shear, torsional, tension or compression. The inner element may for example be made from a metal or a concrete. In an embodiment, the inner element is hollow, such as a tubular. In another embodiment, the inner element is solid. In yet another embodiment, the inner element comprises mainly solid material and at least one longitudinal through-channel for cables and wires.

The object of the invention is further obtained by means of use of a utility pole according to any of the above embodiments. The utility pole may for example be used to suspend a street light or a power cable. By means of using the utility pole for suspending a street light or a power cable, climbing the utility pole for a utility worker is safer than when climbing conventional poles as the surface of the utility pole enables use of standard climbing gear, even in low temperatures.

In the following is described examples of preferred embodiments illustrated in the accompanying drawings, wherein:
- Fig. 1: shows a section of a utility pole according to the invention;
- Fig. 2: shows a cross section of the utility pole;
- Fig. 3a: shows, in a larger scale than figure 2, a detail of the utility pole;
- Fig. 3b: shows, in the same scale as figure 3a, a detail of the utility pole according an embodiment of the invention;
- Fig. 4: shows, in a larger scale than figure 3a, different embodiments of the recesses, and
- Fig. 5: shows, in a smaller scale than figure 1, the utility pole in use for suspending a streetlight.

The figures are depicted in a simplified manner, and details that are not relevant to illustrate what is new with the invention may have been excluded from the figures. The different elements in the figures may necessarily not be shown in the correct scale in relation to each other. Equal reference numbers refer to equal or similar elements.

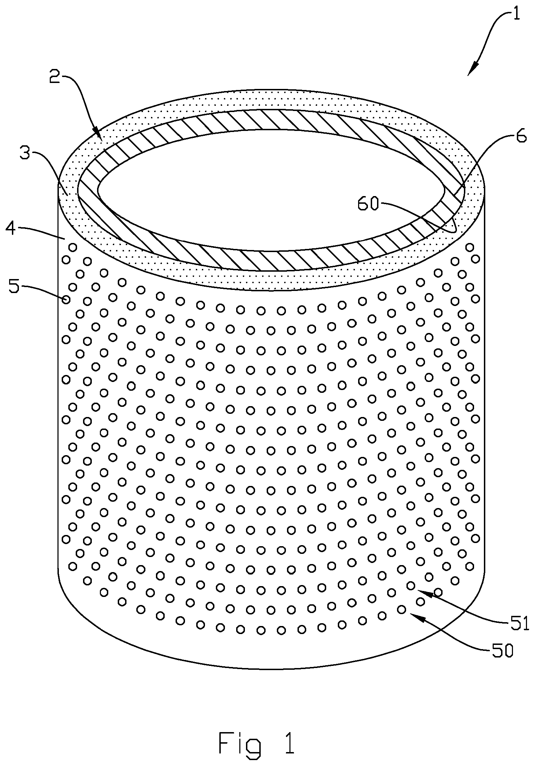

Figure 1 shows a section of a utility pole 1 comprising an elongated member 2. The elongated member 2 is provided with an outer layer 3 made from a synthetic material. In figure 1 the synthetic material is plastic. An external surface 4 of the outer layer 3 is provided with a plurality of recesses 5. The external surface 4 is provided with recesses 5 around a full circumference of the elongated member 2. In an alternative embodiment, the recesses may cover only a part of the circumference.

The recesses 5 form a pattern on the external surface 4, wherein a first row 50 of recesses 5 are offset horizontally around the circumference of the external surface relative to a second row 51 of recesses 5. The recesses 5 of each consecutive row alternate between the arrangement of the first row 50 and the second row 51. This has the advantage that if a crampon (not shown) slips from a recess 5 during climbing, it may only slide to the row 50, 51 below before engaging with another recession 5. By means of the pattern of recesses 5 there are no straight vertical path for the crampon to slide without passing a recession 5 and thus re-establish a safe grip.

It should be noted that the recesses 5 may form another pattern in another embodiment of the invention. In one embodiment, the recesses 5 are distributed randomly over the external surface 4.

Figure 1 further shows that the elongated member 2 comprises an inner element 6. The inner element 6 is shown as a pipe. In figure 1 the inner element 6 is a steel pipe. In another embodiment, the inner element 6 may be a pipe of another material such as concrete or a composite material. In another embodiment, the inner element 6 may be a solid element such as a solid cylinder. The outer layer 3 is disposed on an outer surface 60 of the inner element 6. The outer layer 3 adheres to the outer surface 60, for example by means of an adhesive such as a glue, to avoid delamination.

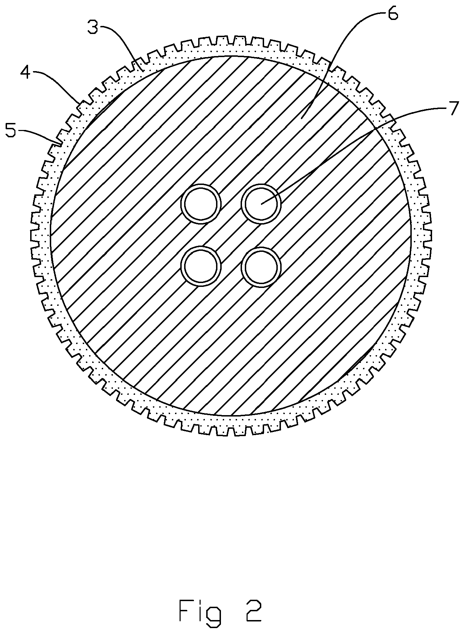

Figure 2 shows a cross section of the utility pole 1 wherein the inner element 6 is shown as a semi-solid cylinder. The inner element 6 comprises four channels 7 for running cables or wires through the elongated member 2. Figure 2 also shows that the recesses 5 extend into the outer layer 3. The depth of the recesses 5 may vary, but will typically be about 1 to 5 mm.

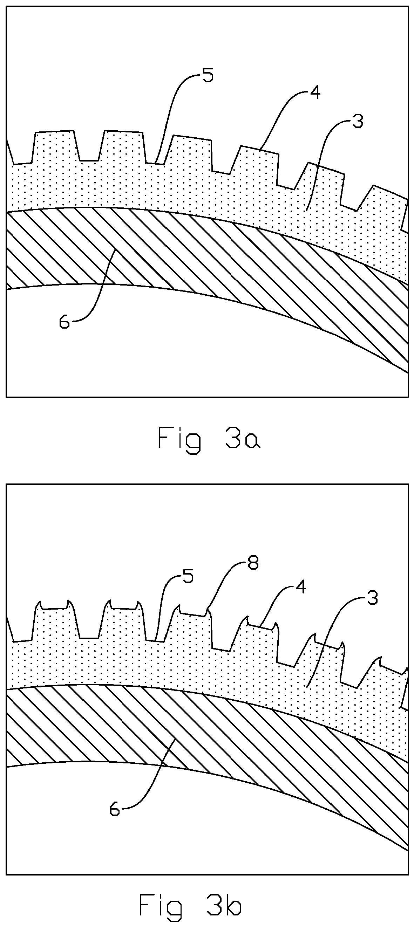

Figure 3a shows the recesses 5 in more detail. The recesses 5 are here shown to have a conical shape narrowing from the external surface and radially into towards the center. However, they may have another shape, such as cylindrical in another embodiment.

Figure 3b shows an embodiment of the invention wherein the external surface 4 is provided with the recesses 5 and protrusions 8. The protrusions 8 form an edge around the recesses 5 and increases a surface friction of the external surface 4. In figure 3b, the protrusions 8 are shown to be formed from the same continuous material as the outer layer 3. This is a result of how the recesses 5 are formed during manufacturing of the utility pole 1. In another embodiment, the protrusions 8 may be attached separately to the external surface 4, for example by plastic welding or an adhesive.

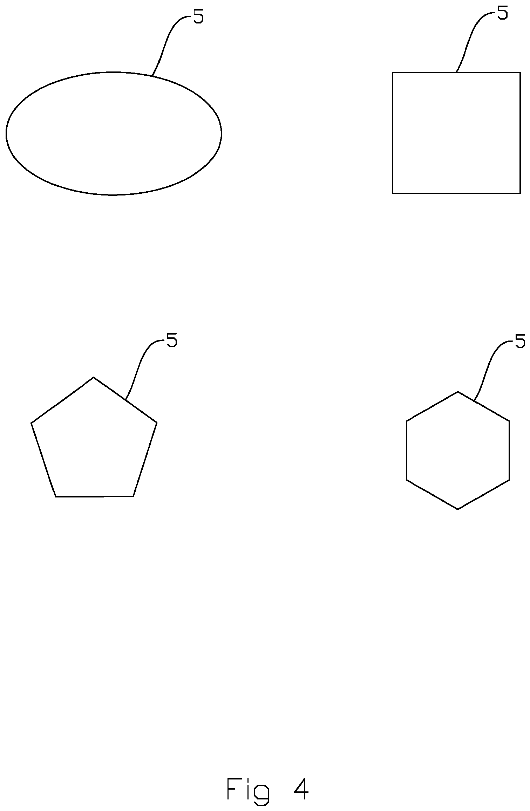

Figure 4 shows four different embodiments of the recesses 5, each embodiment forming a different shape. The recesses may be oval, square, pentagonal or hexagonal. Figure 4 shows a limited number of shapes, but it should be understood that the recesses 5 may have different shape than what is shown here.

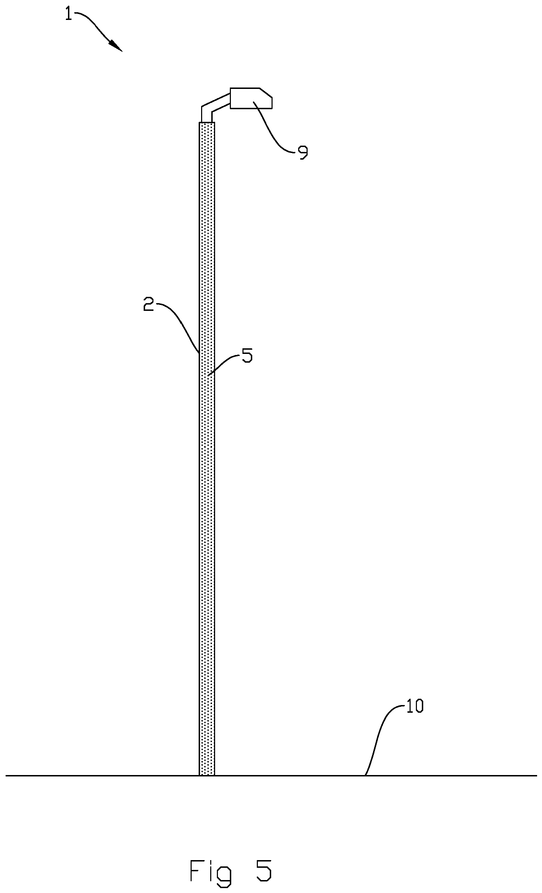

Figure 5 shows the utility pole 1 in use for suspending a streetlight 9. The elongated member 2 is fixed to a ground 10 and extends vertically upwards.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A utility pole (1) comprising an elongated member (2) having an outer layer (3), wherein the outer layer (3) comprises a synthetic material,
**characterised in that** the outer layer (3) is provided with a plurality of recesses (5) on an external surface (4) of the outer layer (3), the recesses (5) being configured for receiving spikes of a crampon.

2. The utility pole (1) according to claim 1, wherein the plurality of recesses (5) on the external surface (4) are provided by deformations of the outer layer (3).

3. The utility pole (1) according to claim 2, wherein the deformation of the outer layer (3) is a plastic deformation.

4. The utility pole (1) according to any of the preceding claims, wherein the external surface (4) is further provided with protrusions (8) projecting out from the external surface (4), wherein the protrusions (8) form an edge around the recesses (5).

5. The utility pole (1) according to any of the preceding claims, wherein the synthetic material is a plastic.

6. The utility pole (1) according to any of the preceding claims, wherein the elongated member (2) comprises an inner element (6), wherein the outer layer (3) is disposed onto an outer surface (60) of the inner element (6).

7. Use of utility pole (1) according to any of the claims 1 to 6.

## Patentansprüche

1. Versorgungsmast (1), aufweisend ein längliches Element (2) mit einer Aussenschicht (3), wobei die Aussenschicht (3) ein synthetisches Material aufweist, **dadurch gekennzeichnet, dass** die Aussenschicht (3) eine Vielzahl von Öffnungen (5) auf einer Aussenfläche (4) der Aussenschicht (3) aufweist, wobei die Öffnungen (5) zur Aufnahme von Spitzen eines Steigeisens ausgebildet sind.

2. Versorgungsmast (1) gemäss Anspruch 1, wobei die Vielzahl von Öffnungen (5) auf der Aussenfläche (4) durch Verformungen der Aussenschicht (3) gebildet sind.

3. Versorgungsmast (1) gemäss Anspruch 2, wobei die Verformung der Aussenschicht (3) eine plastische Verformung ist.

4. Versorgungsmast (1) gemäss einem der vorhergehenden Ansprüche, wobei die Aussenfläche (4) femer Fortsätze (8) aufweist, welche von der Aussenfläche (4) herausragen, wobei die Fortsätze (8) eine Kante um die Öffnungen (5) herum bilden.

5. Versorgungsmast (1) gemäss einem der vorhergehenden Ansprüche, wobei das synthetische Material ein Kunststoff ist.

6. Versorgungsmast (1) gemäss einem der vorhergehenden Ansprüche, wobei das längliche Element (2) ein Innenelement (6) aufweist, wobei die Aussenschicht (3) auf eine Aussenfläche (60) des Innenelements (6) aufgelegt ist.

7. Verwendung eines Versorgungsmasten (1) gemäss einem der Ansprüche 1 bis 6.

## Revendications

1. Un poteau électrique (1) comprenant un élément allongé (2) ayant une couche extérieure (3), dans lequel la couche extérieure (3) comprend un matériau synthétique,
**caractérisé en ce que** la couche extérieure (3) est pourvue d'une pluralité d'évidements (5) sur une surface externe (4) de la couche extérieure (3), les évidements (5) étant configurés pour recevoir des pointes d'un crampon.

2. Le poteau électrique (1) selon la revendication 1, dans lequel la pluralité d'évidements (5) sur la surface externe (4) est fournie par des déformations de la couche extérieure (3).

3. Le poteau électrique (1) selon la revendication 2, dans lequel la déformation de la couche extérieure (3) est une déformation plastique.

4. Le poteau électrique (1) selon l'une quelconque des revendications précédentes, dans lequel la surface externe (4) est en outre pourvue de protrusions (8) faisant saillie à partir de la surface externe (4), dans lequel les protrusions (8) forment un bord autour des évidements (5).

5. Le poteau électrique (1) selon l'une quelconque des revendications précédentes, dans lequel le matériau synthétique est un plastique.

6. Le poteau électrique (1) selon l'une quelconque des revendications précédentes, dans lequel l'élément allongé (2) comprend un élément intérieur (6), dans lequel la couche extérieure (3) est disposée sur une surface extérieure (60) de l'élément intérieur (6).

7. L'utilisation d'un poteau électrique (1) selon l'une quelconque des revendications 1 à 6.
